# EUROPEAN PATENT SPECIFICATION

(11) **EP 1 617 370 B1**
(45) Date of publication and mention of the grant of the patent: **23.01.2013**
(21) Application number: 05106418.6
(22) Date of filing: 13.07.2005
(51) Int. Cl.: G06T 3/40

(54) **Image format transformation**
Bildformat-Transformation
Transformation de format d'image

(30) Priority: 15.07.2004 US 587903 P; 01.10.2004 KR 2004078405
(43) Date of publication of application: 18.01.2006
(73) Proprietor: Samsung Electronics Co., Ltd., Suwon-si, Gyeonggi-do, 443-742 (KR)
(72) Inventor: Ha, Tae-hyeun 5-409 Limkwang Apt., Suwon-si Gyeonggi-do (KR); Kim, Tae-hee 1204-6 Maetan-dong, Gyeonggi-do (KR); Kim, Sung-sik 201-103 Hanil Apt., Seoul (KR)
(74) Representative: Walaski, Jan Filip

(56) References cited:
- WO-A-99/56246
- US-A1- 2002 030 675
- KIM M B ET AL: "The adaptation of 3D stereoscopic video in MPEG-21 DIA" SIGNAL PROCESSING. IMAGE COMMUNICATION, ELSEVIER SCIENCE PUBLISHERS, AMSTERDAM, NL, vol. 18, no. 8, September 2003 (2003-09), pages 685-697, XP004452905 ISSN: 0923-5965
- GENTILE A.; WILLS D.S.: "Impact of pixel per processor ratio on embedded SIMD architectures", IMAGE ANALYSIS AND PROCESSING, 26 September 2001 (2001-09-26), pages 204-208, XP010561248, PISCATAWAY, NJ, USA, IEEE

## Description

The present invention relates to image format transformation.

Digital broadcasting of video data and/or audio data can provide a high-quality service compared with conventional analogue broadcasting. Research into reception and display of a three-dimensional image using this digital broadcasting technique is under way To transceive and display a three-dimensional image, a multi-view image should be produced and transmitted. However, research into transmission and display of a stereo image precedes the research into the reception and display of the three-dimensional image due to limitations of the current network environment.

US 2002/0306675 A1 describes an image display control apparatus which generates a stereoscopic image from three-dimensional image data. Left and right stereo images are scaled in order to adjust their format to a given output display.

WO 99/56246 A describes scaling multi-dimensional signals using variable weighting factors.

A. Gentile / S. D. Wills, "Impact of pixel per processor ratio on embedded SIMD architectures", proceedings 11th International Conference on Image Analysis and Processing, pages 204 - 208, Piscataway, NJ, USA, IEEE teaches to speed up computation by using a Single Instruction Stream, Multiple Data Stream SIMD architecture which uses separate processing units applying the same kind of computations on different data streams.

The present invention provides apparatus for transforming a format of a stereo image as defined in claim 1 appended hereto.

According to a second aspect of the invention, there is provided a method of transforming a format of a stereo image, as defined in claim 13 appended hereto.

The present invention will now be described with reference to the accompanying drawings in which:
Figure 1 illustrates a connection of a video format transforming apparatus according to the present invention and a display device;
Figure 2 is a block diagram of a video format transforming apparatus according to the present invention;
Figure 3 is a detailed block diagram of a formatter according to the present invention;
Figures 4A through 4F illustrate various video formats; and
Figure 5 is a flowchart illustrating a video format transforming method according to the present invention.

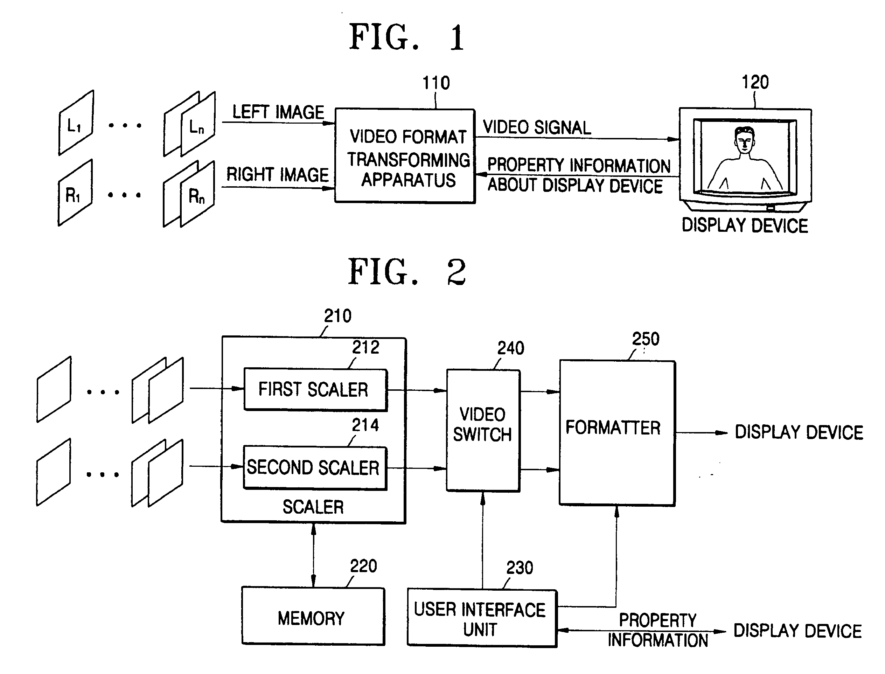

Figure 1 illustrates a connection of a video format transforming apparatus 110, according to the present invention, and a display device 120. The video format transforming apparatus 110 can receive and process a multi-dimensional image which is a multi-view image. For example, the video format transforming apparatus 110 in Figure 1 processes a stereo image.

The video format transforming apparatus 110 receives a stereo image. The stereo image is comprised of a left image and a right image. The left image is comprised of frames L₁, L₂, ... , and Lₙ, and the right image is comprised of frames R₁, R₂, ... , and Rₙ. The video format transforming apparatus 110 transforms a format of the received stereo image into a format that can be processed by the display device 120. More specifically, the video format transforming apparatus 110 scales up or down the received stereo image to provide a resolution suitable for the display device 120. It also transforms the format of the frames of the stereo image, and outputs a stereo image having a frame format suitable for the display device 120. Since the display device 120 generally receives and processes a signal conforming to a Video Electronics Standard Association (VESA) specification, the video format transforming apparatus 110 produces a video signal that conforms to the VESA specification, and transmits the video signal to the display device 120.

To produce a video format suitable for the display device 120, the video format transforming apparatus 110 receives information about the display device 120 via an external port, and thereby can determine characteristics or properties of the display device 120. The external port and the information about the display device 120 is described below.

Figure 2 is a block diagram of a video format transforming apparatus according to the present invention. The video format transforming apparatus includes a scaler 210, a memory 220, a user interface unit 230, a video switch 240, and a formatter 250. The scaler 210 includes first and second scalers 212 and 214, to process a stereo image. More scalers may be needed, depending on the number of dimensions of the image.

The scaler 210 receives a multi-dimensional image and scales the same to conform to a resolution of the display device 120. For example, the display device is set to display an image with a specific format, such as, a 720×480 format, a 1024×768 format, or the like, and the multi-dimensional image has various resolutions.
Hence, a resolution of the received multi-dimensional image is transformed to conform to the resolution of the display device. Horizontal and vertical transformations may be different. Scaling operations of left and right images may be performed at different rates.

The video switch 240 switches the locations of the left and right images and provides the switched left and right images to the formatter 250. When it cannot be recognised which one of the received images is the left or right image, the video switch 240 switches the locations of the left and right images and outputs the switched left and right images to the formatter 250. The memory 220 stores scaled image data. The memory 220 temporarily stores the scaled image so that the left and right images can be output at the same time. The memory 220 may be an SDRAM or the like.

The user interface unit 230 switches the video switch 240 in response to a video switching command received from a user, or provides an interface through which a control command can be received from the user to control the formatter 250 so that a format of the scaled image is appropriate for the display device. To control the formatter 250 so that a format of the scaled image is appropriate for the display device, the user interface unit 230 receives property information about the display device via a serial port or the like. Examples of the property information about the display device include display resolution, information about a frequency of an input signal, information about an image format, and the like. For example, a display data channel (DDC), a DDC2 channel, a DDC2B channel, or the like may be used as a port for transceiving the property information about the display device. DDC provides a sort of a Plug and Play (PnP) function in which a monitor transmits its information to a connected computer. DDC2 and DDC2B are different versions. If using the PnP function, the display device outputs its property information to the outside via a DDC port, and the user interface unit 230 receives the property information about the display device from the display device and transmits it to the video switch 240 and the formatter 250.

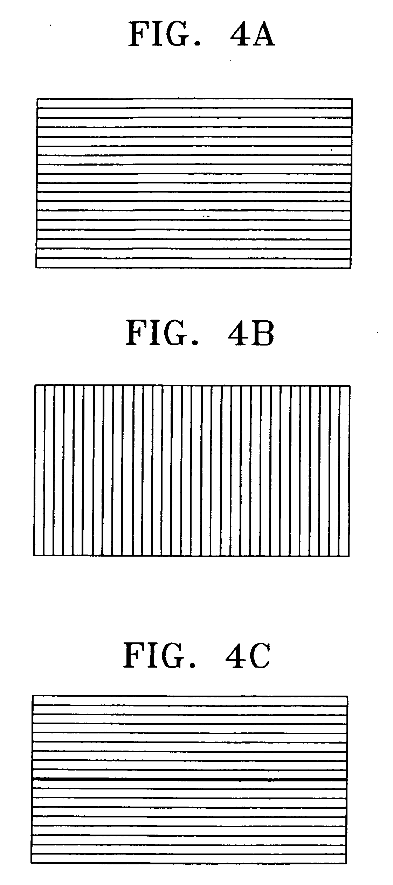

The formatter 250 transforms the format of the scaled images to conform to properties of the display device. The video format transformation is described below with reference to Figures 4A to 4F.

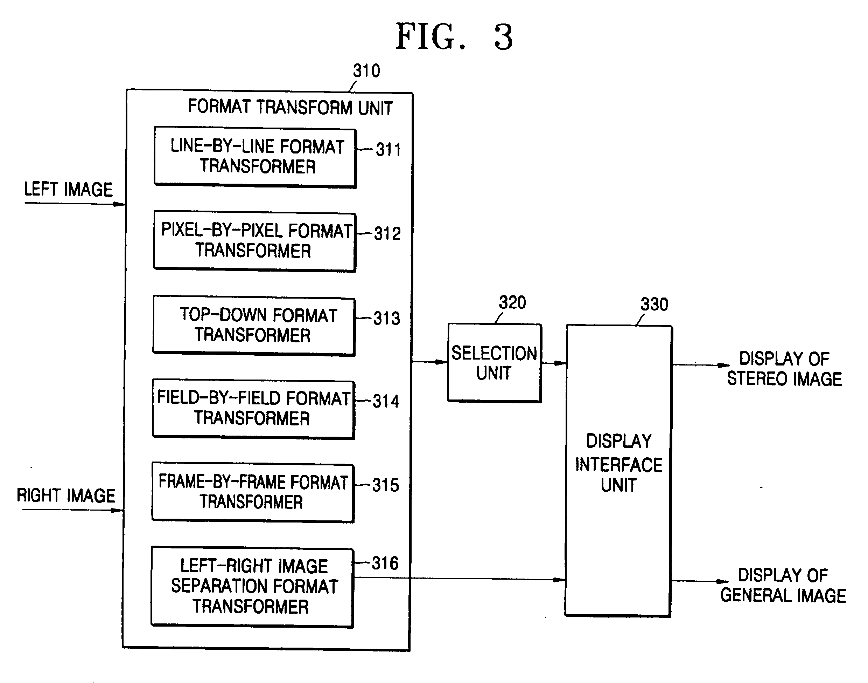

Figure 3 is a detailed block diagram of a formatter 250 forming part of apparatus according to the present invention. The formatter includes a format transform unit 310, a selection unit 320, and a display interface unit 330. The format transform unit 310 produces received left and right images having various formats. To achieve this, the format transform unit 310 includes a line-by-line format transformer 311, a pixel-by-pixel format transformer 312, a top-down format transformer 313, a field-by-field format transformer 314, a frame-by-frame format transformer 315, and a left-right image separation format transformer 316. The line-by-line format, the pixel-by-pixel format, the top-down format, the field-by-field format, the frame-by-frame format, and the left-right image separation format are described below with reference to Figures 4A to 4F.

The selection unit 320 selects a format which is produced by the format transform unit 310a and which is processable by the display device 120. The display interface unit 330 transforms an image having the selected format into an image signal acceptable by the display device, and outputs the image signal. Since an image is generally produced based on the VESA standard, the display interface unit 330 outputs an image having a VESA format.

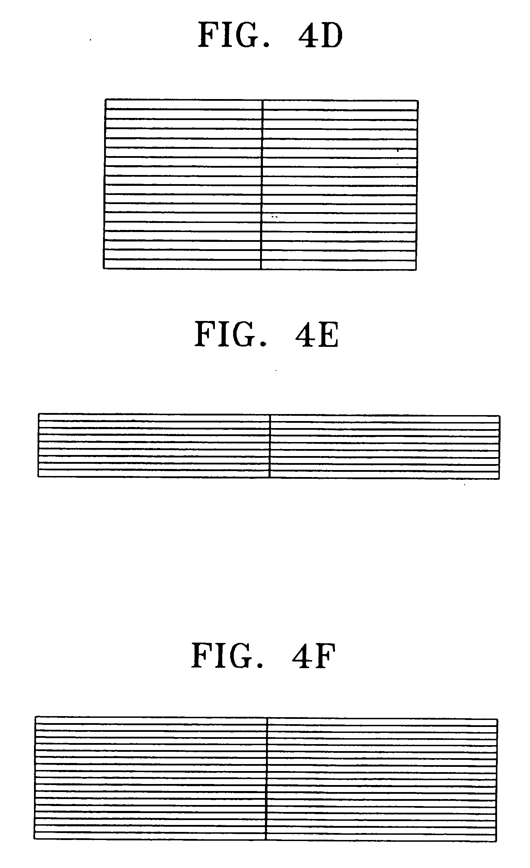

Figures 4A to 4F illustrate various video formats. Figure 4A illustrates a line-by-line image, Figure 4B illustrates a pixel-by-pixel image, Figure 4C illustrates a top-down image, Figure 4D illustrates a side-by-side image, Figure 4E illustrates a field-by-field image, and Figure 4F illustrates a frame-by-frame image. The format transform unit 310 is capable of producing each of these image formats.

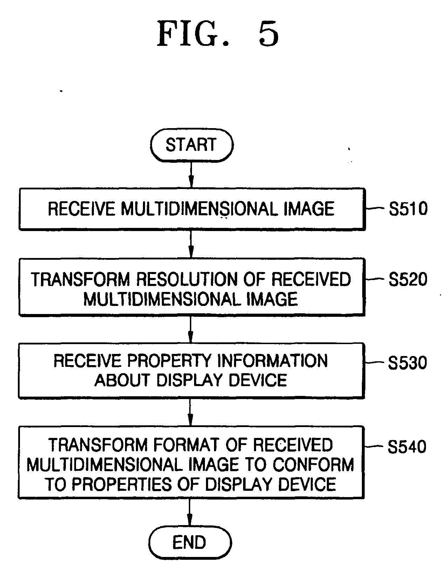

Figure 5 is a flowchart illustrating a video format transforming method according to the present invention. In operation S510, a multi-dimensional image is received. In the present embodiment, a stereo image is received. Thereafter, in operation S520, a resolution of the received multi-dimensional image is scaled up or down. To transform the resolution of a multi-dimensional image, a horizontal resolution and a vertical resolution may be transformed at different rates, and images of multiple dimensions may be scaled at different rates. If a stereo image is received, a left image can be output via a right image output port, and a right image can be output via a left image output port.

Then, in operation S530, property information about a display device is received. Examples of the property information about the display device include a resolution, information about a frequency of an input signal, information about a format of an image, and the like. The property information about the display device may be received via a DDC, a DDC2, or a DDC2B channel, for example. Finally, in operation S540, the format of the received multi-dimensional image is transformed to conform to the properties of the display device. More specifically, the property information about the display device is received, the received multi-dimensional image is transformed into an image having at least one format, a format processable by the display device is selected from produced formats, the multi-dimensional image is transformed into an image signal acceptable by the display device, and the image signal is output to the display device. Since the display device generally receives a signal conforming to the VESA standard, the display device outputs a signal having the VESA format.

As described above, in the present invention, a format of a three-dimensional image or stereo image is transformed to conform to characteristics of a display device, so that the three-dimensional image or stereo image can be easily displayed by any type of display device.

The method of transforming a format of a multi-dimensional image is implemented by way of one or more computer programs. Codes and code segments that constitute the computer programs can be easily construed by programmers skilled in the art. The computer programs are stored in computer readable media and read and executed by computers to accomplish the transforming method. Examples of the computer readable recording media include magnetic storage media, optical recording media, and carrier wave media.

While the present invention has been particularly shown and described with reference to exemplary embodiments thereof, it will be understood that changes may be made within the scope of the present invention as defined by the claims.

## Claims

1. Apparatus (110) for transforming a format of a stereo image, the apparatus comprising:
a scaler (210), comprising first (212) and second (214) scalers, for receiving respective left and right images of the stereo image and for scaling up or down a resolution of the left and right images; and
a formatter (250) for receiving information about properties of a display device (120) and for transforming the format of the stereo image to conform to properties of the display device,
in which the first scaler (212) is arranged to scale the left image at a first scaling rate, and the second scaler (214) is arranged to scale the right image at a second scaling rate different from the first scaling rate.

2. Apparatus according to claim 1, further comprising a memory (220) for storing the scaled image data so that the left and right images of the stereo image are simultaneously output.

3. Apparatus according to claim 1 or claim 2, wherein the information about the properties of the display device includes resolution, input signal frequency information, and/or image format information.

4. Apparatus according to any preceding claim, wherein the formatter (250) comprises:
a format transform unit (310) for transforming the received stereo image into a formatted image;
a selection unit (320) for selecting a format processable by the display device from the produced formats; and
a display interface unit (330) for transforming an image having the selected format into an image signal acceptable by the display device, and for outputting the images signal.

5. The apparatus of any preceding claim, wherein the scaler is arranged to differentiate rates at which a horizontal resolution and a vertical resolution of the stereo image are transformed, to transform the resolution of the stereo image.

6. The apparatus of any one of the preceding claims, further comprising a video switch switching locations of the received left and right images and outputting the left and right images.

7. The apparatus of claim 6, further comprising a user interface unit receiving a command to control the video switch from, a user and providing an input/output interface which receives property information about the display device to control the formatter.

8. The apparatus of claim 7, wherein the user interface unit includes a port transceiving the property information about the display device.

9. The apparatus of claim 8, wherein the property information about the display device includes a resolution, information about a frequency of an input signal, and information about a format of an image, and the port of the user interface unit is one of a display data channel DDC port, a DDC2 port, and a DDC2B port.

10. The apparatus of any preceding claim, wherein the formatter comprises:
a format transform unit transforming the received stereo image into an image having a specific format;
a selection unit selecting a format processable by the display device from the produced formats; and
a display interface unit transforming an image having the selected format into an image signal acceptable by the display device and outputting the image signal.

11. A method of transforming a format of a stereo image, the method comprising:
receiving the stereo image;
scaling up or down a resolution of the stereo image by scaling up or down a resolution of a left image of the stereo image in a first scaler (212) and scaling up or down a resolution of a right image of the stereo image in a second scaler (214);
receiving information about properties of a display device (120); and
transforming the format of the stereo image to conform to the properties of the display device,
in which the left image is scaled at a first scaling rate and the second image is scaled at a second rate different from the first scaling rate

12. The method of claim 11, wherein the transforming step comprises transforming the received stereo image into an image having a specific format, and the method comprises:
selecting a format processable by the display device from the produced formats;
transforming an image having the selected format into an image signal acceptable by the display device; and
outputting the image signal.

13. The method of claim 11 or claim 12, wherein in the receiving of the stereo image and scaling up or down of the resolution of the stereo image, the resolution is transformed by differentiating rates at which a horizontal resolution and a vertical resolution of the stereo image are transformed.

14. The method of any one of claims 11 to 13, wherein in the receiving of the stereo image and scaling up or down of the resolution of the stereo image, ports via which the left and right images are to be output are switched, and the left and right images are output via the switched ports.

15. The method of any one of claims 11 to 14, wherein the property information about the display device includes a resolution, information about a frequency of an input signal, and information about a format of an image, and the port of the user interface unit is one of a display data channel DDC port, a DDC2 port, and a DDC2B port.

16. A computer program which, when executed by a processor is arranged to perform the method of any one of claims 11 to 15.

## Patentansprüche

1. Gerät (110) zum Transformieren eines Formats eines Stereobilds, das Gerät umfassend:
einen Skalierer (210), umfassend erste (212) und zweite (214) Skalierer, zum Empfangen jeweiliger linker und rechter Bilder des Stereobilds und zum Aufwärts- oder Abwärtsskalieren einer Auflösung der linken und rechten Bilder; und
einen Formatierer (250) zum Empfangen von Informationen über Eigenschaften einer Anzeigevorrichtung (120) und zum Transformieren des Formats des Stereobilds, um Eigenschaften der Anzeigevorrichtung zu entsprechen,
wobei der erste Skalierer (212) angeordnet ist, um das linke Bild mit einer ersten Skalierungsrate zu skalieren, und der zweite Skalierer (214) angeordnet ist, um das rechte Bild mit einer zweiten Skalierungsrate, die von der ersten Skalierungsrate verschieden ist, zu skalieren.

2. Gerät nach Anspruch 1, weiter einen Speicher (220) zum Speichern der skalierten Bilddaten umfassend, so dass die linken und rechten Bilder des Stereobilds gleichzeitig ausgegeben werden.

3. Gerät nach Anspruch 1 oder Anspruch 2, wobei die Informationen über die Eigenschaften der Anzeigevorrichtung Auflösung, Eingangssignalfrequenz-Informationen und/oder Bildformat-Informationen enthalten.

4. Gerät nach einem der vorstehenden Ansprüche, wobei der Formatierer (250) umfasst:
eine Formattransformationseinheit (310) zum Transformieren des empfangenen Stereobilds in ein formatiertes Bild;
eine Auswahleinheit (320) zum Auswählen eines Formats, das von der Anzeigevorrichtung verarbeitbar ist, aus den produzierten Formaten; und
eine Anzeigeschnittstelleneinheit (330) zum Transformieren eines Bilds, das das ausgewählte Format aufweist, in ein Bildsignal, das von der Anzeigevorrichtung annehmbar ist, und zum Ausgeben des Bildsignals.

5. Gerät nach einem der vorstehenden Ansprüche, wobei der Skalierer angeordnet ist, um Raten zu differenzieren, mit denen eine horizontale Auflösung und eine vertikale Auflösung des Stereobilds transformiert werden, und um die Auflösung des Stereobilds zu transformieren.

6. Gerät nach einem der vorstehenden Ansprüche, weiter umfassend einen Videoaustauscher, der Positionen der empfangenen linken und rechten Bilder austauscht und die linken und rechten Bilder ausgibt.

7. Gerät nach Anspruch 6, weiter umfassend einer Benutzerschnittstelleneinheit, die einen Befehl zum Steuern des Videoaustauschers von einem Benutzer empfängt und eine Eingangs-/Ausgangs-Schnittstelle bereitstellt, die Eigenschaften-Informationen über die Anzeigevorrichtung zum Steuern des Formatierers empfängt.

8. Gerät nach Anspruch 7, wobei die Benutzerschnittstelleneinheit einen Anschluss enthält, der die Eigenschaften-Informationen über die Anzeigevorrichtung sendet und empfängt.

9. Gerät nach Anspruch 8, wobei die Eigenschaften-Informationen über die Anzeigevorrichtung eine Auflösung, Informationen über eine Frequenz eines Eingangssignals und Informationen über ein Format eines Bilds enthalten und der Anschluss der Benutzerschnittstelleneinheit eines eines Anzeigedatenkanal-(DDC)-Anschlusses, eines DDC2-Anschlusses und eines DDC2B-Anschlusses ist.

10. Gerät nach einem der vorstehenden Ansprüche, wobei der Formatierer umfasst:
eine Formattransformationseinheit, die das empfangene Stereobild in ein Bild mit einem spezifischen Format transformiert;
eine Auswahleinheit, die ein Format, das von der Anzeigevorrichtung verarbeitbar ist, aus den produzierten Formaten auswählt; und
eine Anzeigeschnittstelleneinheit, die ein Bild mit dem ausgewählten Format in ein Bildsignal transformiert, das von der Anzeigevorrichtung annehmbar ist, und das Bildsignal ausgibt.

11. Verfahren zum Transformieren eines Formats eines Stereobilds, das Verfahren umfassend:
Empfangen des Stereobilds;
Aufwärts- oder Abwärtsskalieren einer Auflösung des Stereobilds durch Aufwärts- oder Abwärtsskalieren einer Auflösung eines linken Bilds des Stereobilds in einem ersten Skalierer (212) und Aufwärts- oder Abwärtsskalieren einer Auflösung eines rechten Bilds des Stereobilds in einem zweiten Skalierer (214);
Empfangen von Informationen über Eigenschaften einer Anzeigevorrichtung (120); und
Transformieren des Formats des Stereobilds, um den Eigenschaften der Anzeigevorrichtung zu entsprechen,
wobei das linke Bild mit einer ersten Skalierungsrate skaliert wird und das zweite Bild mit einer zweiten Skalierungsrate, die von der ersten Skalierungsrate verschieden ist, skaliert wird.

12. Verfahren nach Anspruch 11, wobei der Schritt des Transformierens Transformieren des empfangenen Stereobilds in ein Bild mit einem spezifischen Format umfasst und das Verfahren umfasst:
Auswählen eines Formats, das von der Anzeigevorrichtung verarbeitbar ist, aus den produzierten Formaten;
Transformieren eines Bilds mit dem ausgewählten Format in ein Bildsignal, das von der Anzeigevorrichtung annehmbar ist; und
Ausgeben des Bildsignals.

13. Verfahren nach Anspruch 11 oder Anspruch 12, wobei die Auflösung beim Empfangen des Stereobilds und Aufwärts- oder Abwärtsskalieren der Auflösung des Stereobilds durch Differenzieren von Raten, mit denen eine horizontale Auflösung und eine vertikale Auflösung des Stereobilds transformiert werden, transformiert wird.

14. Verfahren nach einem der Ansprüche 11 bis 13, wobei Anschlüsse, über die die linken und rechten Bilder auszugeben sind, beim Empfangen des Stereobilds und Aufwärts- oder Abwärtsskalieren der Auflösung des Stereobilds vertauscht werden und die linken und rechten Bilder über die vertauschten Anschlüsse ausgegeben werden.

15. Verfahren nach einem der Ansprüche 11 bis 14, wobei die Eigenschaften-Informationen über die Anzeigevorrichtung eine Auflösung, Informationen über eine Frequenz eines Eingangssignals und Informationen über ein Format eines Bilds enthalten und der Anschluss der Benutzerschnittstelleneinheit eines eines Anzeigedatenkanal-(DDC)-Anschlusses, eines DDC2-Anschlusses und eines DDC2B-Anschlusses ist.

16. Computerprogramm, das, wenn es von einem Prozessor ausgeführt wird, angeordnet ist, um das Verfahren nach einem der Ansprüche 11 bis 15 auszuführen.

## Revendications

1. Appareil (110) de transformation du format d'un image stéréo, l'appareil comprenant :
un dispositif de mise à l'échelle (210), comprenant des premier (212) et second (214) dispositifs de mise à l'échelle, destiné à recevoir des images gauche et droite respectives de l'image stéréo et à augmenter ou réduire une résolution des images gauche et droite ; et
un formateur (250) destiné à recevoir des informations relatives aux propriétés d'un dispositif d'affichage (120) et à transformer le format de l'image stéréo afin de le rendre conforme aux propriétés du dispositif d'affichage,
dans lequel le premier dispositif de mise à l'échelle (212) est agencé pour mettre à l'échelle l'image gauche à un premier taux de mise à l'échelle, et le second dispositif de mise à l'échelle (214) est agencé pour mettre à l'échelle l'image droite à un second taux de mise à l'échelle différent du premier taux de mise à l'échelle.

2. Appareil selon la revendication 1, comprenant en outre une mémoire (220) pour mémoriser les données d'image mises à l'échelle de telle sorte que les images gauche et droite de l'image stéréo soient produites en sortie simultanément.

3. Appareil selon la revendication 1 ou la revendication 2, dans lequel les informations relatives aux propriétés du dispositif d'affichage comportent une résolution, des informations de fréquence de signal d'entrée, et/ou des informations de format d'image.

4. Appareil selon l'une quelconque des revendications précédentes, dans lequel le formateur (250) comprend :
une unité de transformée de format (310) pour transformer l'image stéréo reçue en une image formatée ;
une unité de sélection (320) pour sélectionner un format pouvant être traité par le dispositif d'affichage parmi les formats produits ; et
une unité d'interface d'affichage (330) pour transformer une image ayant le format sélectionné en un signal d'image acceptable par le dispositif d'affichage, et pour produire en sortie le signal d'image.

5. Appareil selon l'une quelconque des revendications précédentes, dans lequel le dispositif de mise à l'échelle est agencé pour différencier des taux auxquels une résolution horizontale et une résolution verticale de l'image stéréo sont transformées, afin de transformer la résolution de l'image stéréo.

6. Appareil selon l'une quelconque des revendications précédentes, comprenant en outre un commutateur vidéo qui commute des emplacements des images gauche et droite reçues et produit en sortie les images gauche et droite.

7. Appareil selon la revendication 6, comprenant en outre une unité d'interface utilisateur qui reçoit une commande pour commander le commutateur vidéo depuis un utilisateur et fournir une interface d'entrée/sortie qui reçoit des informations de propriété relatives au dispositif d'affichage afin de commander le formateur.

8. Appareil selon la revendication 7, dans lequel l'unité d'interface utilisateur comporte un port qui transmet et reçoit les informations de propriété relatives au dispositif d'affichage.

9. Appareil selon la revendication 8, dans lequel les informations de propriété relatives au dispositif d'affichage comportent une résolution, des informations sur une fréquence d'un signal d'entrée, et des informations sur un format d'une image, et le port de l'unité d'interface utilisateur est l'un d'un port de canal de données d'affichage DDC, d'un port DDC2 et d'un port DDC2B.

10. Appareil selon l'une quelconque des revendications précédentes, dans lequel le formateur comprend :
une unité de transformée de format qui transforme l'image stéréo reçue en une image ayant un format spécifique ;
une unité de sélection qui sélectionne un format pouvant être traité par le dispositif d'affichage parmi les formats produits ; et
une unité d'interface d'affichage qui transforme une image ayant le format sélectionné en un signal d'image acceptable par le dispositif d'affichage et produit en sortie le signal d'image.

11. Procédé de transformation d'un format d'une image stéréo, le procédé comprenant :
la réception de l'image stéréo ;
l'augmentation ou la réduction d'une résolution de l'image stéréo en augmentant ou réduisant une résolution d'une image gauche de l'image stéréo dans un premier dispositif de mise à l'échelle (212) et augmentant ou réduisant une résolution d'une image droite de l'image stéréo dans un second dispositif de mise à l'échelle (214) ;
la réception d'informations relatives aux propriétés d'un dispositif d'affichage (120) ; et
la transformation du format de l'image stéréo afin de le rendre conforme aux propriétés du dispositif d'affichage,
dans lequel l'image gauche est mise à l'échelle à un premier taux de mise à l'échelle, et la seconde image est mise à l'échelle à un second taux de mise à l'échelle différent du premier taux de mise à l'échelle.

12. Procédé selon la revendication 11, dans lequel l'étape de transformation comprend la transformation de l'image stéréo reçue en une image ayant un format spécifique, et le procédé comprenant :
la sélection d'un format pouvant être traité par le dispositif d'affichage parmi les formats produits ;
la transformation d'une image ayant le format sélectionné en un signal d'image acceptable par le dispositif d'affichage ; et
la production en sortie du signal d'image.

13. Procédé selon la revendication 11 ou la revendication 12, dans lequel dans la réception de l'image stéréo et l'augmentation ou la réduction de la résolution de l'image stéréo, la résolution est transformée en différenciant des taux auxquels une résolution horizontale et une résolution verticale de l'image stéréo sont transformées.

14. Procédé selon l'une quelconque des revendications 11 à 13, dans lequel dans la réception de l'image stéréo et l'augmentation ou la réduction de la résolution de l'image stéréo, les ports par lesquels les images gauche et droite doivent être produites en sortie sont commutés, et les images gauche et droite sont produites en sortie par l'intermédiaire des ports commutés.

15. Procédé selon l'une quelconque des revendications 11 à 14, dans lequel les informations de propriété relatives au dispositif d'affichage comportent une résolution, des informations sur une fréquence d'un signal d'entrée, et des informations sur un format d'une image, et le port de l'unité d'interface utilisateur est l'un d'un port de canal de données d'affichage DDC, d'un port DDC2 et d'un port DDC2B.

16. Programme informatique qui, lorsqu'il est exécuté par un processeur, est agencé pour exécuter le procédé selon l'une quelconque des revendications 11 à 15.
